(19) Europäisches Patentamt / European Patent Office / Office européen des brevets

(11) **EP 3 923 110 A1**

(12) **EUROPEAN PATENT APPLICATION**
published in accordance with Art. 153(4) EPC

(43) Date of publication:
**15.12.2021 Bulletin 2021/50**

(21) Application number: **19750047.3**

(22) Date of filing: **21.05.2019**

(51) Int Cl.:
*G05D 23/22* (2006.01)  *F23D 14/12* (2006.01)

(86) International application number:
**PCT/CN2019/087870**

(87) International publication number:
**WO 2020/199324 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.04.2019 CN 201910264197**

(71) Applicant: **Shanghai Yibai Science And Technology Co., Ltd.**
**Minhang District**
**Shanghai 202153 (CN)**

(72) Inventors:
• **YANG, Jingfeng**
  **Shanghai 202153 (CN)**
• **SHEN, Peng**
  **Shanghai 202153 (CN)**
• **WANG, Haibin**
  **Shanghai 202153 (CN)**

(74) Representative: **Wang, Bo**
**Panovision IP**
**Ebersberger Straße 3**
**85570 Markt Schwaben (DE)**

(54) **TEMPERATURE CONTROL SYSTEM FOR GAS-FIRED RADIANT TUBE AND CONTROL METHOD THEREFOR**

(57) The invention discloses a temperature control system with a fuel gas radiant tube, comprising at least one fuel gas radiant tube extending into a heat treatment furnace for heat radiating, and further comprising: a first thermocouple arranged inside the fuel gas radiant tube for temperature control of a heating are, a second thermocouple embedded in the wall of the fuel gas radiant tube for temperature control during a heat preserving period and over-temperature alarm during A heating-up period; and a third thermocouple arranged in a working area of the heat treatment furnace for temperature control during the heating-up period. The invention further discloses a temperature control method, wherein the first, the second and the third thermocouples are respectively electrically connected to a temperature controller; flow rates of fuel and oxygen-enriched air are controlled by the temperature controller via a PID algorithm according to the temperature monitored by each thermocouple, thereby controlling the combustion reaction inside the fuel gas radiant tube, so that the temperature of each period in the heat treatment furnace can be accurately controlled. The temperature control method can ensure the stability, uniformity, accuracy and sensitivity of the furnace temperature signal.

Fig. 1

**Description**

**FIELD OF THE INVENTION**

The present invention relates to a temperature control device during heating of a heat treatment equipment, and in particular, to a temperature control system with a fuel gas radiant tube and a method thereof.

**BACKGROUND OF THE INVENTION**

A prior temperature control method of a heat treatment furnace is that the temperature is controlled by a temperature signal which is measured by a thermocouple in a working area. This temperature control method has the following disadvantages: a varied inserted position of the thermocouple and a varied gas flow in the furnace have a significant influence on the temperature signal, thereby causing fluctuation, inaccuracy and lag of the temperature signal.
Therefore, it is necessary to develop a temperature control device for a heat treatment furnace to have a fast temperature control response and high control precision, so as to overcome or ameliorate at least one of the disadvantages of the prior art.

**SUMMARY OF THE INVENTION**

In order to solve the problems existing in the prior art, the present invention provides a temperature control system with a fuel gas radiant tube and a method thereof.
Detailed technical solutions are as follows:
A first aspect of the present invention provides a temperature control system with a fuel gas radiant tube, comprising at least one fuel gas radiant tube extending into a heat treatment furnace for heat radiating, and further comprising:

a first thermocouple, arranged inside the fuel gas radiant tube for temperature control of a heating area;

a second thermocouple, embedded in a wall of the fuel gas radiant tube for temperature control during a heat preserving period and over-temperature alarm during a heating-up period; and

a third thermocouple, arranged in a working area of the heat treatment furnace for temperature control during the heating-up period;

wherein the first thermocouple, the second thermocouple and the third thermocouple are respectively electrically connected to a temperature controller; flow rates of fuel and oxygen-enriched air are controlled by the temperature controller via a PID algorithm according to the temperature monitored by each thermocouple, thereby the temperature of each period in the heat treatment furnace can be precisely controlled.

Preferably, the fuel gas radiant tube is a U-shaped structure with a hollow cavity, and a heat sink is disposed on the outer wall of the fuel gas radiant tube to increase a heat exchange area.
Preferably, the oxygen-enriched air is a by-product produced in a nitrogen preparation process of a heat treatment plant.
Preferably, the temperature control system further comprises:
a burner nozzle disposed at the front end of the fuel gas radiant tube and respectively connected with the fuel and oxygen-enriched air.
Preferably, the temperature control system further comprises:

a flue, arranged at the rear end of the fuel gas radiant tube; and

a heat exchanger, arranged between the flue and the rear end of the fuel gas tube;

wherein a hot medium inlet of the heat exchanger is connected to the rear end of the fuel gas radiant tube, and a hot medium outlet is connected to the flue; and, a cold medium inlet of the heat exchanger is connected to a blower through a pipe, and a cold medium outlet is connected to the front end of the fuel gas radiant tube through a pipe.

Preferably, a second control valve is disposed in a fuel conveying pipe, a third control valve is disposed in an oxygen-enriched air conveying pipe, and a first control valve is disposed in a connection pipe between the blower and the fuel gas radiant tube; and, the first control valve, the second control valve, the third control valve and the blower are respectively electrically connected to the temperature controller.

A second aspect of the present invention provides a temperature control method with a fuel gas radiant tube, comprising the steps of:

Step 1, arranging a fuel gas radiant tube connected with fuel and oxygen-enriched air in a heat treatment furnace; arranging a first thermocouple inside the fuel gas radiant tube for monitoring a temperature inside the fuel gas radiant tube; embedding a second thermocouple in a wall of the fuel gas radiant tube for monitoring a temperature of the wall of the fuel gas radiant tube; and, arranging a third thermocouple in a working area outside the fuel gas radiant tube for monitoring a temperature of the working area of the heat treatment furnace;

Step 2, transmitting a temperature signal measured by the third thermocouple to a temperature controller performing a control program for calculating and judging; determining a working state of the heat treatment furnace which can be a heating-up period or a heat preserving period; if the working state is a heating-up period, controlling the flow rates of the fuel and oxygen-enriched air according to a temperature difference between the temperature measured by the third thermocouple and a target temperature, thereby controlling a combustion reaction inside the fuel gas radiant tube;

Step 3, during the heat preserving period, transmitting a temperature signal measured by the second thermocouple to the temperature controller, controlling the flow rates of the fuel and oxygen-enriched air by the temperature controller according to the target temperature, so as to adjust the temperature of the temperature control area, wherein the second thermocouple does not perform furnace temperature control during the heating-up period;

Step 4, transmitting a temperature signal measured by the first thermocouple to the temperature controller, determining whether the temperature of the heat treatment furnace is above a alarm temperature; if the temperature is above the alarm temperature, automatically controlling the flow rates of the fuel and oxygen-enriched air by the temperature controller according to the target temperature, so as to make the temperature lower than the alarm temperature.

Preferably, in Steps 2, 3 and 4, determining the working state of temperature control areas of the heat treatment furnace which can be the heating-up period or the heat preserving period, according to a temperature difference between the temperature measured by the third thermocouple and the target temperature in the temperature control areas.

Preferably, if the temperature measured by the third thermocouple of the working area is less than the target temperature, the corresponding heat treatment furnace control area is during the heating-up period; if the temperature measured by the third thermocouple of the working area is above or equal to the target temperature, the corresponding heat treatment furnace control area enters the heat preserving period.

Preferably, if the heat treatment furnace is during the heating-up period, the furnace temperature is controlled via a PID algorithm, according to the temperature difference between the temperature measured by the third thermocouple and the target temperature in the temperature control area; if the heat treatment furnace enters the heat preserving period, the furnace temperature is controlled via a PID algorithm, according to the temperature difference between the temperature measured by the second thermocouple and the target temperature in the temperature control area.

Preferably, in Step 3, a part of heat generated by the combustion reaction inside the fuel gas radiant tube increases the temperature of the fuel, and the other part of the heat is transferred to the fuel gas radiant tube and an external environment through heat conduction, radiation and convection, so that the temperature of the heat treatment furnace environment can be increased, wherein:

the heat, generated by the combustion reaction inside the fuel gas radiant tube, is defined by the following equation:

$$Q = K^{\dot{m}} \times H \times \Delta t \qquad \text{(Equation 1)}$$

in which, $\dot{m}$ is mass flow rate (i.e. fuel mass per unit time participating in the combustion reaction), H is the combustion heat value per unit fuel mass, $\Delta t$ is the combustion reaction time, and K is the combustion rate;

according to the heat balance, the total heat in each part is equal to the combustion heat, and the heat relationship is defined by the following equation:

$$Q = Q1 + Q2 + Q3 \qquad \text{(Equation 2)}$$

in which, Q is the combustion heat, Q1 is the heat absorbed by the radiant tube, Q2 is the heat absorbed by the environment outside the tube (i.e. heat treatment furnace), and Q3 is the heat absorbed by the fuel inside the tube; Q1, Q2 and Q3 are respectively defined by the following equations:

$$Q_1 = m \int_{Tf}^{Tr} Cp \cdot dT = \overline{Cp} \cdot (Tr - Tm)$$  (Equation 3)

$$Q2 = h_0(T_r - T_{fo})$$  (Equation 4)

$$Q3 = h_i(T_r - T_{fi})$$  (Equation 5)

in which, m is the mass of the radiant tube, Cp is the constant pressure heat capacity, $\overline{Cp}$ is the average constant pressure heat capacity, Tr is the radiant tube temperature (the internal temperature of the radiant tube is approximately the same as the the radiant tube temperature due to the thin thickness of the tube), and Tm is the room temperature;

$h_o$ is the heat transfer coefficient between the radiant tube and the environment outside the tube, $h_i$ is the heat transfer coefficient between the radiant tube and the environment inside the tube, $T_{fo}$ is the temperature of the environment outside the tube, $T_r$ is the temperature of the tube wall, and $T_{fi}$ is the temperature of the environment inside the tube;

according to equation 3, the heat balance is defined as the following equation:

$$\dot{m} \cdot H \cdot \Delta t = \overline{Cp} \cdot (Tr - Tm) + h_o(T_r - T_{fo}) + h_i(T_r - T_{fi})$$  (Equation 6)

in which, $T_{fo}$ is the temperature of the working area of the heat treatment furnace, $T_r$ is the temperature of the radiant tube wall, and $T_{fi}$ is the temperature inside the radiant tube measured by the thermocouple; and

the deviation output control value between the real-time temperature and the target temperature can be calculated by the temperature controller via the PID algorithm using the values of $T_{fo}$, $T_r$, $(T_r-T_{fo})$ and $(T_r-T_{fi})$, thereby achieving precise control of the temperature of the heat treatment furnace during the heating-up period and the heat preserving period.

Preferably, the temperature can be controlled according to the temperature of the working area during the heating-up period, and the temperature can be controlled according to the temperature of the radiant tube wall during the heat preserving period.

The foregoing technical solutions in the present invention have the following advantages or beneficial effects: Based on the temperature control system and method with the fuel gas radiant tube in the present invention, the thermocouples are respectively arranged inside the radiant tube, in the radiant tube wall and in the working area of the heat treatment furnace, and different temperature control modes are adopted at different periods. During the heating-up period, the temperature is controlled according to the temperature signal of the thermocouple in the working area, while during the heat preserving period, the temperature is controlled according to the temperature signal of the radiant tube wall. Since the positions of the thermocouples are fixed and the influence of the gas flow is small, the deviation control output value between the real-time temperature and the predetermined temperature can be calculated via the PID algorithm, thereby achieving precise control of the temperature of the resistance furnace. Moreover, the temperature control method can ensure the stability, uniformity, accuracy and sensitivity of the furnace temperature signal.

**BRIEF DESCRIPTION OF THE DRAWINGS**

The accompanying drawings, together with the specification, illustrate exemplary embodiments of the present disclosure, and, together with the description, serve to explain the principles of the present invention.

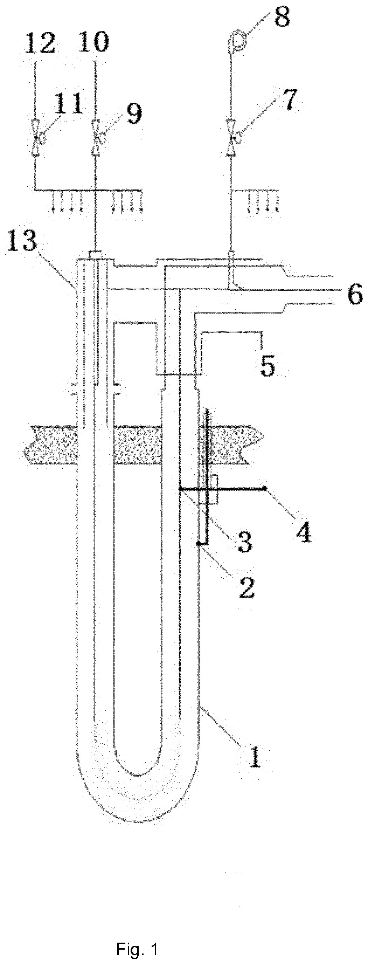

Fig. 1 is a schematic diagram of a temperature control system with a fuel gas radiant tube according to the present invention.

**DETAILED DESCRIPTION OF PREFERRED EMBODIMENTS OF THE INVENTION**

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

As used herein, the term "plurality" means a number greater than one.

Hereinafter, certain exemplary embodiments according to the present disclosure will be described with reference to the accompanying drawings.

Referring to Fig.1, an embodiment of the present invention provides a temperature control system with a fuel gas radiant tube, comprising at least one fuel gas radiant tube 1 extending into a heat treatment furnace for heat radiating, and further comprising: a first thermocouple 2 arranged inside the fuel gas radiant tube 1 for temperature control of a heating area; a second thermocouple 3 embedded in the wall of the fuel gas radiant tube 1 for temperature control during a heat preserving period and over-temperature alarm during a heating-up period, and a third thermocouple 4 arranged in a working area of the heat treatment furnace for temperature control during the heating-up period; wherein the first thermocouple 2, the second thermocouple 3 and the third thermocouple 4 are respectively electrically connected to a temperature controller; flow rates of fuel 10 and oxygen-enriched air 12 are controlled by the temperature controller via a PID algorithm according to the temperature monitored by each thermocouple, thereby controlling the combustion reaction inside the fuel gas radiant tube 1, so that he temperature of each period in the heat treatment furnace can be accurately controlled. The fuel 10 is burned inside the radiant tube, and the inner wall of the fuel gas radiant tube 1 is heated by a high temperature gas formed by the combustion of the fuel 10, and the heat treatment furnace is heated by the fuel gas radiant tube 1 through heat transfer between the the outer wall of the radiant tube and the environment outside the radiant tube.

In a preferred embodiment, the fuel gas radiant tube 1 is a U-shaped structure with a hollow cavity, and a heat sink is disposed on the outer wall of the fuel gas radiant tube 1. Compared with the conventional fuel gas radiant tube, the outer surface of the radiant tube is provided with the heat sink, which increases the heat transfer area, strengthens the combustion, increases the fuel gas temperature, improves the heat efficiency, reduces the emission of exhaust gas and NOx, and improves the comprehensive utilization level and economy efficiency. Different from the conventional U-shaped radiant tube, the U-shaped fuel gas radiant tube 1 used in this embodiment does not have a fixed inlet and outlet, and the two outlets of the U-shaped tube also can be the inlets of the combustion gas, which solves the problems of the high temperature of the combustion section of the tube and the low temperature at the gas outlet.

In a preferred embodiment, the oxygen-enriched air is a by-product produced in a nitrogen preparation process of a heat treatment plant. This embodiment utilizes the oxygen-enriched air produced during a nitrogen preparation process, and the oxygen-enriched air is conveyed by rich oxygen, which effectively increases the combustion efficiency and heating rate.

In a preferred embodiment, referring to Fig. 1, the temperature control system further comprises a burner nozzle 13 disposed at the front end of the fuel gas radiant tube 1 and respectively connected with the fuel 10 and the oxygen-enriched air 12.

In a preferred embodiment, referring to Fig. 1, the temperature control system further comprises a flue 6 arranged at the rear end of the fuel gas radiant tube 1 and a heat exchanger 5 arranged between the flue 6 and the rear end of the fuel gas tube 1; wherein the heat exchanger 5 is an important component for improving the heating efficiency of the fuel gas radiant tube 1, and is used for preheating the air for combustion and improving the heating efficiency of the fuel gas radiant tube 1. Specifically, a hot medium inlet of the heat exchanger 5 is connected to the rear end of the fuel gas radiant tube 1, and a hot medium outlet is connected to the flue 6; and, a cold medium inlet of the heat exchanger 5 is connected to a blower 8 through a pipe, and a cold medium outlet is connected to the front end of the fuel gas radiant tube 1 through a pipe. The cold air provided by the blower 8 is preheated by the heat exchanger 5 and then burned together with the fuel. The flame and exhaust gas generated by the combustion can flow to the flue 6, and the heat energy is radiated into the furnace through the tube wall, and the flue gas passes through the heat exchanger to heat exchange with the cold air, thus the temperature of the flue gas is decreased, and the cold air is heated.

In a preferred embodiment, referring to Fig. 1, a second control valve 9 is disposed in a conveying pipe of the fuel 10 to control the flow rate of the fuel 10, a third control valve 11 is disposed in a conveying pipe of the oxygen-enriched air 12 to control the flow rate of the oxygen-enriched air 12, and a first control valve 7 is disposed in a connection pipe between the blower 8 and the fuel gas radiant tube 1; and , the first control valve 7, the second control valve 9, the third control valve 11 and the blower 8 are respectively electrically connected to a temperature controller. The temperature controller controls the temperature via the PID algorithm, according to the temperature differences among the temperature inside the radiant tube, outside the tube and of the tube wall, and according to the temperature differences between the temperatures in each corresponding position and the predetermined temperatures in the same positions. This control method can prevent the problems that the temperature of the tube is overheated and the temperature of the working area is lag adjusted, thereby improving the uniformity and stability of the working temperature.

Based on the above technical solutions, the fuel gas radiant tube heating device of the temperature control system is composed of a fuel gas radiant tube 1, a burner nozzle 13 and a heat exchanger 5, and the burner nozzle 13 is a key component of the entire fuel gas radiant tube heating device. The gas radiant tube 1 is heated by the combustion of the fuel injected by the burner nozzle 13. The fuel gas radiant tube 13 is a key component for radiating heat energy released by the combustion of the fuel to the object which is needed to be heated. The heat exchanger 5 is an important component for improving the heating efficiency of the fuel gas radiant tube, and is used for preheating the air for combustion and improving the heating efficiency of the fuel gas radiant tube 1. Specifically, one end of the fuel gas radiant tube 1 is connected to the burner nozzle 13 and the other end is connected to the flue 6. The cold air is preheated by the heat exchanger 5 and then burned together with the fuel. The flame and exhaust gas generated by the combustion can flow to the flue 6, and the heat energy is radiated into the furnace through the tube wall, and the flue gas passes through the heat exchanger to heat exchange with the cold air, thus the temperature of the flue gas is decreased, and the cold air is heated.

In a preferred embodiment, it provides a temperature control method base on the aforementioned temperature control system with a fuel gas radiant tube, comprising the steps of:

Step 1, arranging a fuel gas radiant tube 1 connected with a fuel 10 and oxygen-enriched air 12 in a heat treatment furnace; arranging a first thermocouple 2 inside the fuel gas radiant tube 1 for monitoring a temperature inside the fuel gas radiant tube 1; embedding a second thermocouple 3 in the wall of the fuel gas radiant tube 1 for monitoring a temperature of the wall of the fuel gas radiant tube 1; and, arranging a third thermocouple 4 in a working area outside the fuel gas radiant tube 1 for monitoring a temperature of the working area of the heat treatment furnace;

Step 2, transmitting a temperature signal measured by the third thermocouple 4 to a temperature controller performing a control program for calculating and judging; determining a working state of the heat treatment furnace which can be a heating-up period or a heat preserving period; if the working state is a heating-up period, controlling the flow rates of fuel 10 and oxygen-enriched air 12 according to a temperature difference between the temperature measured by the third thermocouple 4 and a target temperature, thereby controlling a combustion reaction inside the fuel gas radiant tube 1;

Step 3, during the heat preserving period, transmitting a temperature signal measured by the second thermocouple 3 to the temperature controller, controlling the flow rates of the fuel 10 and oxygen-enriched air 12 by the temperature controller according to the target temperature, so as to adjust the temperature of the temperature control area, wherein the second thermocouple 3 does not perform furnace temperature control during the heating-up period;

Step 4, transmitting a temperature signal measured by the first thermocouple 2 to the temperature controller, determining whether the temperature of the heat treatment furnace is above a alarm temperature; if the temperature is above the alarm temperature, automatically controlling the flow rates of the fuel 10 and oxygen-enriched air 12 by the temperature controller according to the target temperature, so as to make the temperature less than the alarm temperature.

In this embodiment, in Steps 2, 3 and 4, determining the working state of temperature control areas of the heat treatment furnace which can be the heating-up period or the heat preserving period, according to a temperature difference between the temperature measured by the third thermocouple 4 and the target temperature in the temperature control areas.

In this embodiment, if the temperature measured by the third thermocouple 4 of the working area is less than the target temperature, the corresponding heat treatment furnace control area is during the heating-up period; if the temperature measured by the third thermocouple 4 of the working area is above or equal to the target temperature, the corresponding heat treatment furnace control area enters the heat preserving period.

In this embodiment, if the heat treatment furnace is during the heating-up period, the furnace temperature is controlled via a PID algorithm, according to the temperature difference between the temperature measured by the third thermocouple 4 and the target temperature in the temperature control area; if the heat treatment furnace enters the heat preserving period, the furnace temperature is controlled via a PID algorithm, according to the temperature difference between the temperature measured by the second thermocouple 3 and the target temperature in the temperature control area.

In this embodiment, in Step 3, a part of heat generated by the combustion reaction inside the fuel gas radiant tube 1 increases the temperature of the fuel, and the other part of the heat is transferred to the fuel gas radiant tube and an external environment through heat conduction, radiation and convection, so that the temperature of the heat treatment furnace environment can be increased, wherein:

the heat, generated by the combustion reaction inside the fuel gas radiant tube 1, is defined by the following equation:

$$Q = K\dot{m} \times H \times \Delta t \qquad \text{(Equation 1)}$$

in which, $\dot{m}$ is mass flow rate (i.e. fuel mass per unit time participating in the combustion reaction), H is the combustion heat value per unit fuel mass, $\Delta t$ is the combustion reaction time, and K is the combustion rate;

according to the heat balance, the total heat in each part is equal to the combustion heat, and the heat relationship is defined by the following equation:

$$Q = Q1 + Q2 + Q3 \qquad \text{(Equation 2)}$$

in which, Q is the combustion heat, Q1 is the heat absorbed by the radiant tube, Q2 is the heat absorbed by the environment outside the tube (i.e. heat treatment furnace), and Q3 is the heat absorbed by the fuel inside the tube; Q1, Q2 and Q3 are respectively defined by the following equations:

$$Q_1 = m \int_{Tf}^{Tr} Cp \cdot dT = \overline{Cp} \cdot (Tr - Tm) \qquad \text{(Equation 3)}$$

$$Q2 = h_0(T_r - T_{fo}) \qquad \text{(Equation 4)}$$

$$Q3 = h_i(T_r - T_{fi}) \qquad \text{(Equation 5)}$$

in which, m is the mass of the radiant tube, Cp is the constant pressure heat capacity, $\overline{Cp}$ is the average constant pressure heat capacity, Tr is the radiant tube temperature (the internal temperature of the radiant tube is approximately the same as the the radiant tube temperature due to the thin thickness of the tube), and Tm is the room temperature;

$h_o$ is the heat transfer coefficient between the radiant tube and the environment outside the tube, $h_i$ is the heat transfer coefficient between the radiant tube and the environment inside the tube, $T_{fo}$ is the temperature of the environment outside the tube, $T_r$ is the temperature of the tube wall, and $T_{fi}$ is the temperature of the environment inside the tube;

according to equation 3, the heat balance is defined as the following equation:

$$\dot{m} \cdot H \cdot \Delta t = \overline{Cp} \cdot (Tr - Tm) + h_0(T_r - T_{fo}) + h_i(T_r - T_{fi}) \qquad \text{(Equation 6)}$$

in which, $T_{fo}$ is the temperature of the working area of the heat treatment furnace, $T_r$ is the temperature of the radiant tube wall, and $T_{fi}$ is the temperature inside the radiant tube measured by the thermocouple; and

the deviation output control value between the real-time temperature and the target temperature can be calculated by the temperature controller via the PID algorithm using the values of $T_{fo}$, $T_r$, $(T_r\text{-}T_{fo})$ and $(T_r\text{-}T_{fi})$, thereby achieving precise control of the temperature of the heat treatment furnace during the heating-up period and the heat preserving period.

The temperature control method with a fuel gas radiant tube in the present embodiment, the thermocouples are respectively arranged inside the radiant tube, in the radiant tube wall and in the working area of the heat treatment furnace, and different temperature control modes are adopted at different periods. During the heating-up period, the temperature is controlled according to the temperature signal of the thermocouple in the working area, and the temperature difference between the work area temperature and the wall temperature is considered for comprehensive temperature control, while during the heat preserving period, the temperature is controlled according to the temperature signal of the radiant tube wall, and the temperature difference between the wall temperature and the work area temperature is considered for comprehensive temperature control. Since the positions of the thermocouples are fixed and the influence of the gas flow is small, the deviation control output value between the real-time temperature and the predetermined temperature can be calculated via the PID algorithm, thereby achieving precise control of the temperature of the resistance furnace. The temperature control method can ensure the stability, uniformity, accuracy and sensitivity of the furnace temperature signal.

Once the nature of the invention has been sufficiently described, as well as preferred embodiment, it is stated to the appropriate effects that the described elements may be modified, provided that this does not imply an alteration of the essential characteristics of the invention, which are claimed below.

**Claims**

1. A temperature control system with a fuel gas radiant tube, comprising at least one fuel gas radiant tube (1) extending into a heat treatment furnace for heat radiating, **characterized in that** further comprising:

   a first thermocouple (2), arranged inside the fuel gas radiant tube (1) for temperature control of a heating area;
   a second thermocouple (3), embedded in a wall of the fuel gas radiant tube (1) for temperature control during a heat preserving period and over-temperature alarm during a heating-up period; and
   a third thermocouple (4), arranged in a working area of the heat treatment furnace for temperature control during the heating-up period;.
   wherein the first thermocouple (2), the second thermocouple (3) and the third thermocouple (4) are respectively electrically connected to a temperature controller; flow rates of fuel (10) and oxygen-enriched air (12) are controlled by the temperature controller via a PID algorithm according to the temperature monitored by each thermocouple, thereby controlling the combustion reaction inside the fuel gas radiant tube (1), so that the temperature of each period in the heat treatment furnace can be accurately controlled.

2. The temperature control system with the fuel gas radiant tube as claimed in Claim 1, wherein the fuel gas radiant tube (1) is a U-shaped structure with a hollow cavity

3. The temperature control system with the fuel gas radiant tube as claimed in Claim 1, wherein the oxygen-enriched air (12) is a by-product produced in a nitrogen preparation process of a heat treatment plant.

4. The temperature control system with the fuel gas radiant tube as claimed in Claim 1, wherein the temperature control system further comprises a burner nozzle (13) disposed at the front end of the fuel gas radiant tube (1) and respectively connected with the fuel (10) and the oxygen-enriched air (12).

5. The temperature control system with the fuel gas radiant tube as claimed in Claim 4, wherein the temperature control system further comprises:

   a flue (6), arranged at the rear end of the fuel gas radiant tube (1); and

a heat exchanger (5), arranged between the flue (6) and the rear end of the fuel gas tube (1);
wherein a hot medium inlet of the heat exchanger (5) is connected to the rear end of the fuel gas radiant tube (1), and a hot medium outlet is connected to the flue (6); and, a cold medium inlet of the heat exchanger (5) is connected to a blower (8) through a pipe, and a cold medium outlet is connected to the front end of the fuel gas radiant tube (1) through a pipe.

6. A temperature control method with a fuel gas radiant tube, **characterized in that** comprising the steps of:

Step 1, arranging a fuel gas radiant tube (1) connected with fuel (10) and oxygen-enriched air (12) in a heat treatment furnace; arranging a first thermocouple (2) inside the fuel gas radiant tube (1) for monitoring a temperature inside the fuel gas radiant tube (1); embedding a second thermocouple (3) in a wall of the fuel gas radiant tube (1) for monitoring a temperature of the wall of the fuel gas radiant tube (1); and, arranging a third thermocouple (4) in a working area outside the fuel gas radiant tube (1) for monitoring a temperature of the working area of the heat treatment furnace;

Step 2, transmitting a temperature signal measured by the third thermocouple (4) to a temperature controller performing a control program for calculating and judging; determining a working state of the heat treatment furnace which can be a heating-up period or a heat preserving period; if the working state is a heating-up period, controlling the flow rates of fuel (10) and oxygen-enriched air (12) according to a temperature difference between the temperature measured by the third thermocouple (4) and a target temperature, thereby controlling a combustion reaction inside the fuel gas radiant tube (1);

Step 3, during the heat preserving period, transmitting a temperature signal measured by the second thermocouple (3) to the temperature controller, controlling the flow rates of the fuel (10) and oxygen-enriched air (12) by the temperature controller according to the target temperature, so as to adjust the temperature of the temperature control area, wherein the second thermocouple (3) does not perform furnace temperature control during the heating-up period;

Step 4, transmitting a temperature signal measured by the first thermocouple (2) to the temperature controller, determining whether the temperature of the heat treatment furnace is above an alarm temperature; if the temperature is above the alarm temperature, automatically controlling the flow rates of the fuel (10) and oxygen-enriched air (12) by the temperature controller according to the target temperature, so as to make the temperature less than the alarm temperature.

7. The temperature control method with the fuel gas radiant tube as claimed in Claim 6, wherein in Steps 2, 3 and 4, determining the working state of temperature control areas of the heat treatment furnace which can be the heating-up period or the heat preserving period, according to a temperature difference between the temperature measured by the third thermocouple (4) and the target temperature in the temperature control areas.

8. The temperature control method with the fuel gas radiant tube as claimed in Claim 6, wherein if the temperature measured by the third thermocouple (4) of the working area is less than the target temperature, the corresponding heat treatment furnace control area is during the heating-up period; if the temperature measured by the third thermocouple (4) of the working area is above or equal to the target temperature, the corresponding heat treatment furnace control area enters the heat preserving period.

9. The temperature control method with the fuel gas radiant tube as claimed in Claim 6, wherein if the heat treatment furnace is during the heating-up period, the furnace temperature is controlled via a PID algorithm, according to the temperature difference between the temperature measured by the third thermocouple (4) and the target temperature in the temperature control area; if the heat treatment furnace enters the heat preserving period, the furnace temperature is controlled via a PID algorithm, according to the temperature difference between the temperature measured by the second thermocouple (3) and the target temperature in the temperature control area.

10. The temperature control method with the fuel gas radiant tube as claimed in Claim 6, wherein in Step 3, a part of heat generated by the combustion reaction inside the fuel gas radiant tube (1) increases the temperature of the fuel, and the other part of the heat is transmitted to the fuel gas radiant tube (1) and an external environment through heat conduction, radiation and convection, so that the temperature of the heat treatment furnace environment can be increased, in which:

the heat, generated by the combustion reaction inside the fuel gas radiant tube (1), is defined by the following equation:

$$Q = K\dot{m} \times H \times \Delta t \qquad \text{(Equation 1)}$$

in which, $\dot{m}$ is mass flow rate which is fuel mass per unit time participating in the combustion reaction, H is the combustion heat value per unit fuel mass, $\Delta t$ is the combustion reaction time, and K is the combustion rate; according to the heat balance, the total heat in each part is equal to the combustion heat, and the heat relationship is defined by the following equation:

$$Q = Q1 + Q2 + Q3 \qquad \text{(Equation 2)}$$

in which, Q is the combustion heat, Q1 is the heat absorbed by the radiant tube, Q2 is the heat absorbed by the environment outside the tube which is the heat treatment furnace, and Q3 is the heat absorbed by the fuel inside the tube; Q1, Q2 and Q3 are respectively defined by the following equations:

$$Q_1 = m \int_{Tf}^{Tr} Cp \cdot \mathrm{dT} = \overline{Cp} \cdot (Tr - Tm) \qquad \text{(Equation 3)}$$

$$Q2 = h_0 (T_r - T_{fo}) \qquad \text{(Equation 4)}$$

$$Q3 = h_i (T_r - T_{fi}) \qquad \text{(Equation 5)}$$

in which, m is the mass of the radiant tube, Cp is the constant pressure heat capacity, $\overline{Cp}$ is the average constant pressure heat capacity, Tr is the radiant tube temperature and the internal temperature of the radiant tube is approximately the same as the the radiant tube temperature due to the thin thickness of the tube, and Tm is the room temperature;
$h_o$ is the heat transfer coefficient between the radiant tube and the environment outside the tube, $h_i$ is the heat transfer coefficient between the radiant tube and the environment inside the tube, $T_{fo}$ is the temperature of the environment outside the tube, $T_r$ is the temperature of the tube wall, and $T_{fi}$ is the temperature of the environment inside the tube;
according to equation 3, the heat balance is defined as the following equation:

$$\dot{m} \cdot H \cdot \Delta t = \overline{Cp} \cdot (Tr - Tm) + h_0 (T_r - T_{fo}) + h_i (T_r - T_{fi}) \qquad \text{(Equation 6)}$$

in which, $T_{fo}$ is the temperature of the working area of the heat treatment furnace, $T_r$ is the temperature of the radiant tube wall, and $T_{fi}$ is the temperature inside the radiant tube measured by the thermocouple; and
the deviation output control amount of the real-time temperature from the target temperature can be calculated by the temperature controller via the PID algorithm using the values of $T_{fo}$, $T_r$, $(T_r\text{-}T_{fo})$ and $(T_r\text{-}T_{fi})$, thereby achieving precise control of the temperature of the heat treatment furnace during the heating-up period and the heat preserving period.

Fig. 1

## INTERNATIONAL SEARCH REPORT

| International application No. |
|---|
| **PCT/CN2019/087870** |

**A. CLASSIFICATION OF SUBJECT MATTER**

G05D 23/22(2006.01)i; F23D 14/12(2006.01)i

According to International Patent Classification (IPC) or to both national classification and IPC

**B. FIELDS SEARCHED**

Minimum documentation searched (classification system followed by classification symbols)

G05D;F23D

Documentation searched other than minimum documentation to the extent that such documents are included in the fields searched

Electronic data base consulted during the international search (name of data base and, where practicable, search terms used)

VEN; CNABS; CNTXT; DWPI; CNKI: 燃气, 辐射, 管, 热电偶, 管壁, 升温, 超温, 加热, 控制, 流量, gas, radiant, tube, thermocouple, wall, hyperthermic, excess, heat+, control+, flow, ratio

**C. DOCUMENTS CONSIDERED TO BE RELEVANT**

| Category* | Citation of document, with indication, where appropriate, of the relevant passages | Relevant to claim No. |
|---|---|---|
| E | CN 209388199 U (SHANGHAI YIBAI TECHNOLOGY CO., LTD.) 13 September 2019 (2019-09-13)<br>claims 1-9, description, paragraphs [0004]-[0031], and figure 1 | 1-5 |
| X | CN 107239084 A (SHENWU TECHNOLOGY GROUP CORP.) 10 October 2017 (2017-10-10)<br>description, paragraphs [0005]-[0049], and figures 1-2 | 1-10 |
| A | CN 101724744 A (SUN, Libin) 09 June 2010 (2010-06-09)<br>entire document | 1-10 |
| A | CN 106642126 A (BEIJING SHENWU ENVIRONMENT & ENERGY TECHNOLOGY CO., LTD.) 10 May 2017 (2017-05-10)<br>entire document | 1-10 |
| A | CN 108826989 A (ANGANG STEEL COMPANY LIMITED) 16 November 2018 (2018-11-16)<br>entire document | 1-10 |
| A | CN 106501015 A (BEIJING SHENWU ENVIRONMENT & ENERGY TECHNOLOGY CO., LTD.) 15 March 2017 (2017-03-15)<br>entire document | 1-10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 December 2019** | **02 January 2020** |

| Name and mailing address of the ISA/CN | Authorized officer |
|---|---|
| **China National Intellectual Property Administration**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2019/087870** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 106774521 A (BEIJING SHENWU ENVIRONMENT & ENERGY TECHNOLOGY CO., LTD.) 31 May 2017 (2017-05-31) <br> entire document | 1-10 |
| A | US 3517916 A (SUNBEAM EQUIP) 30 June 1970 (1970-06-30) <br> entire document | 1-10 |
| A | JP 2003207104 A (DAIDO STEEL CO., LTD.) 25 July 2003 (2003-07-25) <br> entire document | 1-10 |

Form PCT/ISA/210 (second sheet) (January 2015)

**INTERNATIONAL SEARCH REPORT**
Information on patent family members

International application No.

**PCT/CN2019/087870**

| Patent document cited in search report | | | Publication date (day/month/year) | Patent family member(s) | | | Publication date (day/month/year) |
|---|---|---|---|---|---|---|---|
| CN | 209388199 | U | 13 September 2019 | CN | 109947152 | A | 28 June 2019 |
| CN | 107239084 | A | 10 October 2017 | None | | | |
| CN | 101724744 | A | 09 June 2010 | CN | 101724744 | B | 06 July 2011 |
| CN | 106642126 | A | 10 May 2017 | None | | | |
| CN | 108826989 | A | 16 November 2018 | None | | | |
| CN | 106501015 | A | 15 March 2017 | CN | 106501015 | B | 07 September 2018 |
| CN | 106774521 | A | 31 May 2017 | None | | | |
| US | 3517916 | A | 30 June 1970 | None | | | |
| JP | 2003207104 | A | 25 July 2003 | None | | | |

Form PCT/ISA/210 (patent family annex) (January 2015)